# EUROPEAN PATENT SPECIFICATION

(11) **EP 3 232 816 B1**
(45) Date of publication and mention of the grant of the patent: **20.11.2019**
(21) Application number: 15808233.9
(22) Date of filing: 11.12.2015
(51) Int. Cl.: A23L 23/00, A23L 35/00

(54) **SAVOURY CONCENTRATES AS SAUCE WITH A JELLIFIED TEXTURE BASED ON LEGUMINOUS STARCH**
WOHLSCHMECKENDE KONZENTRATE ALS SOSSE MIT GELIERTER TEXTUR AUF BASIS VON HÜLSENFRUCHTSTÄRKE
CONCENTRÉS SAVOUREUX EN SAUCE AVEC UNE TEXTURE GÉLIFIÉE À BASE D'UN AMIDON DE LÉGUME

(30) Priority: 19.12.2014 EP 14199092
(43) Date of publication of application: 25.10.2017
(73) Proprietor: Société des Produits Nestlé S.A., 1800 Vevey (CH)
(72) Inventor: MAIER, Claire, 78224 Singen (DE); SCHWAEGERL, Martina, 78315 Radolfzell (DE); HANLE, Christoph, 78224 Singen (DE); LAGRRIGUE-GOJANI, Sophie, 78224 Singen (DE)
(74) Representative: Dinger, Hansjörg
(86) International application number: PCT/EP2015/079462
(87) International publication number: WO 2016/096666

(56) References cited:
- EP-A1- 2 452 570
- WO-A1-2007/068402
- WO-A1-2012/097930
- WO-A1-2014/053287
- WO-A1-2014/053288
- CA-A1- 2 161 713

## Description

The invention relates to a composition in gel form for preparing a food product, to a process for preparing a food product, and to the use of the composition for preparing a food product. In particular, the invention relates to a gel composition comprising legume starch and un-gelatinised starch for preparing savoury food products such as sauces, gravies, and soups.

Concentrated food products, such as dehydrated gravies and sauces, and bouillon or stock cubes, have been known for many years. Savoury dehydrated products are becoming increasingly unattractive to consumers due to a perception that they are not natural, they have an old fashioned image, and they have an artificial appearance. Some products have a pasty texture, but these are typically fat-based and therefore have a high fat content and consequently a poor health or nutritional profile. In the search for alternative product types having different characteristics and advantages over traditional food concentrates, food compositions concentrated in gel form have been developed. A number of such products are now known. They are typically based on the presence of a gelling agent or a combination of two or more gelling agents.

Those products give usually after dilution and product preparation only limited viscosity in the final product, typically they are used to prepare bouillons. Examples of such products are described in WO 2007/068484, WO 2008/151850, WO 2008/151851, WO 2008/151852 and WO 2012/062919.

Those products present the disadvantage that the hydrocolloids used are fully solubilised in the food concentrate to develop the gel texture and cannot therefore give additional thickening after dilution in order to give the consistency typical for a soup or sauce. In a dehydrated soup typically 20 to 50g/l of starch or flour is used to thicken the dish. Incorporation of such high amounts of starch in those products is a problem as starch might get gelatinised during processing, therefore not providing binding in the final application, and it might negatively affect the formation of the gel texture by dramatically increasing the viscosity.

WO 2012/097930 describes a food concentrate in a gel format comprising 10 to 50% un-gelatinised starch that will develop the viscosity during product preparation. This composition presents the disadvantage that a high amount of polyols (5 to 60%) is used in the composition to get the right gel texture that is otherwise affected by the incorporation of the un-gelatinised starch. Polyols might not be perceived as very natural and attractive by consumers. Furthermore, certain polyols in too high amounts may have not desired side effects with some consumers, such as e.g. a non-desired laxative effect. Pea starch is described as binding agent (un-gelatinised starch) after dissolution of the concentrate to make a sauce. Pea starch is not described as gelling agent.

WO 2014/053288 describes a food concentrate in a gel format comprising carrageenan and un-gelatinised starch that will develop the viscosity during product preparation. A disadvantage may be the slow dissolution properties in the final dish.

Another commercial product is based on the use of three hydrocolloids and un-gelatinised starch. This product typically suffer from problems that, when used to make a soup or sauce, the gelling agents are still able to form a gel very quickly during cooling. This re-forming of a gel can lead to an undesirable texture for consumption of the product when the dish is cooling. There is therefore a need for a gelling agent composition which does not gel during normal food consumption times.

Those products might also be difficult to dissolve in cold or hot water without lumps. To improve dissolution, some of those products need a pre-dissolution/heating step at a specific temperature before being added to the final application, thus making the product complicated to use for consumers.

There is a persisting need for a composition for preparing soups, sauces and gravies, which composition has the texture of a gel and develops texture upon dilution and product preparation. The gel-forming composition should be able to set after production and dissolve quickly during product preparation (during a standard heating step or during dilution of the gel composition in hot water). There is further a need for a gel composition for preparing a food product that is stable during transportation and storage, and shows no or a low syneresis (up to 2% of the total composition) during storage typically for a few weeks or even up to several months after.

The object of the present invention is to improve the state of the art and to provide a gel composition that at least goes part way to overcoming one or more of the above mentioned disadvantages of existing gel compositions or at least provides a useful alternative. Particularly, the objective is to provide a gel composition which: i) further thickens upon use of said gel product during the preparation of a food product for example by heating or dissolution of the gel product in hot water, e.g. at a consumer's home; ii) dissolves easily in hot water; iii) does not readily and quickly reform a gel upon cooling of a prepared sauce or food-dish; and iv) does not make use of an additive such as polyols, which may not be favourably perceived by consumers; v) is perceived healthy/natural by the consumers; vi) does not need xanthan; vii) shows no syneresis under normal storage conditions (20-30°C) after 3 months.

The object of the present invention is achieved by the subject matter of the independent claims. The dependent claims further develop the idea of the present invention.

Accordingly, the present invention provides in a first aspect a composition for preparing a food product, the composition comprising:
i) water in an amount of 30 to 60% (by weight of the total composition),
ii) flavourings in an amount of 1 to 40% (by weight of the total composition),
iii) salt in an amount of 10 to 30% (by weight of the total moisture),
iv) legume starch as a gelling agent in an amount of 3 to 15% (by weight of the total moisture), and
v) un-gelatinised starch in an amount of 10 to 40% (by weight of the total composition);
wherein the composition is in the form of a gel and does not include polyol, guar gum, locust bean gum, tara gum, cassia gum, konjac mannan, carrageenan or any combination thereof.

In a second aspect, the invention pertains to a process for preparing a composition for preparing a food product comprising the steps:
a) mixing legume starch as a gelling agent in an amount of 3 to 15% (by weight of the total moisture) in water at a temperature below 60°C;
b) heating the mixture to a temperature of at least 80°C, preferably to at least 90°C and maintain the temperature for at least 2 min to cook the starch;
c) adding salt in an amount of 10 to 30% (by weight of the total moisture) and adding ingredients which are not heat sensitive or need a pasteurisation and adding flavourings in an amount of 1 to 40% (by weight of the total composition) and mixing further;
d) pasteurize the mixture of step c) at a temperature of at least 70°C, preferably of at least 80°C;
e) cooling the mixture after pasteurization to a temperature within the range 20°C to 60°C, preferably 25°C to 50°C, more preferably 30°C to 45°C; and
f) adding un-gelatinised starch in an amount of 10 to 40% (by weight of the total composition) to the mixture of step e) after the cooling, mixing further to form the composition, filling the package and letting the composition sit and form a gel;
wherein the composition is in the form of a gel and does not include polyol, guar gum, locust bean gum, tara gum, cassia gum, konjac mannan, carrageenan or any combination thereof.

In a further preferred embodiment of the process of the invention, the un-gelatinised starch is added in the form of a solid powder or in the form as a slurry of starch in oil. This has the advantage that they are industrially feasible and A still further aspect of the invention is a food product comprising the composition according to claim 1.

Water (as amount) is herein to be understood as the total amount of moisture present. The concentration of salt is to be calculated as (amount of salt)/(amount of salt + total moisture) . The same relates for other dissolved matter such as the legume starch gelling agent (amount legume starch)/(legume starch + total moisture).

It has now been found by the inventors that a simple combination of legume starch with un-gelatinised starch in a composition with water, flavourings and salt has certain desirable and surprising characteristics. It forms a gel, is easily dosed into packaging containers, is easily diluted in hot water, can be used to prepare a thick sauce, soup or gravy that does not readily re-form a gel on cooling, and delivers a smooth mouthfeel which is ideal for a thick sauce or gravy and showed no syneresis without xanthan under normal storage conditions (20-30°C) after 3 months.

Furthermore, it has been found that even further improved gels can be obtained by combining legume starch with xanthan in a combination with un-gelatinised starch. The gels dissolve even more readily in hot water, and they do not form any lumps during the dissolution process.

Accordingly, the present invention provides in a first aspect a composition for preparing a food product, the composition comprising:
i) water in an amount of 30 to 60% (by weight of the total composition),
ii) flavourings in an amount of 1 to 40% (by weight of the total composition),
iii) salt in an amount of 10 to 30% (by weight of the total moisture),
iv) pea starch as a gelling agent in an amount of 3 to 15% (by weight of the total moisture), and
v) un-gelatinised starch in an amount of 10 to 40% (by weight of the total composition);
wherein the composition is in the form of a gel.

The term "gel", in the context of this invention, means a solid or semi-solid material formed by interaction with one or more polysaccharides and water, and that comes out of the packaging in one piece. Once removed from the packaging, it does not flow on a time scale of a few minutes. The product is able to keep its shape over a time scale of a few minutes. The rupture strength of the mentioned product is at least 20g. Preferably the rupture strength of the mentioned product is at least 25g. Preferably the rupture gel strength of the mentioned product is between 20g and 300g. Most preferably the rupture gel strength of the mentioned product is between 23g and 250g.

The term "flavourings" in the context of this invention includes flavouring agents, taste enhancing ingredients, herbs, spices, vegetables, meat and fish components (in liquid or powder form), carbohydrates or mixtures thereof, which are suitable for being used in a food product or food concentrate product. Carbohydrates may be provided by sugars, maltodextrins, glucose syrups etc. Taste enhancing ingredients may be provided by monosodium glutamate (MSG) and/or yeast extract etc.

"Salt" refers to any suitable alkali metal salt or mixture thereof. The salt used in the composition of this invention is typically, but not limited to, sodium chloride. For example, potassium chloride may be used or any low-sodium product having a taste impression of sodium chloride may be used, as long as the taste in the end formulation is acceptable. In a further embodiment, the composition of the invention comprises salt in the range 10 to 30% (by weight of the total moisture), preferably from 14 to 28%, preferably from 16 to 26% (by weight of the total moisture).

The term "legume starch" refers to a starch from the plant family of *leguminosae.* In the context of this invention "legume starch" includes pea starch, chickpea starch, lentil starch, bean starch, or a combination thereof. Preferably legume starch includes pea starch, chickpea starch, mung bean starch, red lentil starch, or a combination thereof. Most preferably legume starch is pea starch.

Legume flours can also be used as a source of legume starch. The term "legume flour" refers to flour from the plant family of *leguminosae.* In the context of this invention "legume flour" includes pea flour, chickpea flour, lentil flour, bean flour, or a combination thereof. Preferably legume flour includes pea flour, chickpea flour, mung bean flour, red lentil flour, or a combination thereof. Preferably legume flour is pea flour. The person skilled in the art is calculating based on the amount of starch how much flour has to be used to fall within this invention.

The composition of the invention comprises the legume starch in the range 3 to 15% (by weight of the total moisture), preferably from 3 to 13%, preferably from 3.5 to 12%, preferably from 3.5 to 12%, preferably from 4 to 12%, preferably from 4 to 11%, preferably from 4 to 10%, preferably from 4.5 to 10%, preferably from 4.5 to 9%, preferably from 5 to 8% (by weight of the total moisture).

In a further embodiment, in case pea starch is used the composition comprises an amount in the range 3 to 15% (by weight of the total moisture), preferably from 3 to 13%, preferably from 3.5 to 12%, preferably from 3.5 to 12%, preferably from 4 to 12%, preferably from 4 to 11%, preferably from 4 to 10%, preferably from 4.5 to 10%, preferably from 4.5 to 9%, preferably from 5 to 8% (by weight of the total moisture).

The term "un-gelatinised starch" refers to starch that is in an un-swollen, semi-crystalline state. Due to birefringence, it presents maltese crosses when examined under the microscope with polarized light. During cooking the starch loses the birefringence, starts to absorb water which results in swelling of the starch granules and product thickening. The starch or mixtures of starches are selected among starches that have a rather high gelatinization temperature such as corn starch, chemically modified starches, physically modified starches such as annealed or heat-moisture treated starch, preferably heat-moisture treated potato starch. Flours can also be used as a source of starch.

In a further embodiment, the composition of the invention comprises the un-gelatinised starch in the range 20 to 30% by weight of the total composition.

The legume starch is gelatinized during the preparation of the composition to act as a gelling agent. The un-gelatinised starch must remain in an un-swollen, semi-crystalline state during preparation of the composition. This is so that the thickening function of the starch is preserved until such time as a user or a consumer at home adds hot water to the composition or adds the gel composition to hot water and cooks it for a few minutes. The ungelatinized starch then gelatinises to provide the desired thickening to the sauce or gravy. The un-gelatinised starch used for the preparation of the gel composition can be selected according to a specific gelatinisation/pasting profile so that it can be incorporated into the composition at a temperature below the gelatinising (or swelling) temperature, but above the critical temperature at which the gelling agent legume starch may form a gel. The preferred un-gelatinised starch of the invention is corn starch or physically modified starch, for example heat-moisture treated potato starch.

In the context of this invention the composition further comprises glucose/sugar in an amount of 2 to 12% (by weight of the total composition), preferably from 3 to 9% (by weight of the total composition), more preferably from 3 to 7% (by weight of the total composition).

The amount of water (total amount of moisture present) in the composition is in the range 30 to 60% of the total composition. A preferred range includes 37 to 54%, preferable from 40 to 50% (by weight of the total composition).

The water activity of the product is preferably below 0.9, preferably below 0.87, preferably between 0.6 and 0.87, more preferably between 0.7 and 0.85.

Furthermore, it has been found that even further improved gels can be obtained by combining legume starch with xanthan. The gels dissolve even more readily in hot water.

In a further preferred embodiment, the composition of the invention further comprises xanthan. Preferably, xanthan is present in the composition of the invention in an amount of 0.05 to 0.5%, more preferably from 0.1 to 0.35%, most preferably from 0.15 to 0.3%. (by weight of the total composition). Xanthan is added together with the starch in the first process step.

"Xanthan" is a hetero-polysaccharide of high molecular weight commonly used as a food thickening agent (for example, in salad dressings) and as a stabiliser (for example, in cosmetic products). Its main chain is constituted of glucose units and its side chain is a trisaccharide consisting of alpha-D-mannose which contains an acetyl group, beta-D-glucuronic acid, and a terminal beta-D-mannose unit linked with a pyruvate group.

Optionally, the composition of the invention may further comprise fat or/and oil. Fat and oil are standard ingredients in food concentrate compositions and contribute generally to the taste and texture of the gel composition, but also to final food products for which the consumer has made use of the gel composition in its preparation. Preferably, the fat or/and oil are present in the composition of the invention in the range of 3 to 13% (by weight of the total composition).

In a still further embodiment, the flavourings are present in the composition of the invention in the range of 5 to 25% (by weight of the total composition).

In a preferred embodiment, the composition of the present invention does not include polyol, guar gum, locust bean gum, tara gum, cassia gum, konjac mannan, carrageenan or any combination thereof. In a more preferred embodiment, the composition of the present invention does not include polyol

In a still further aspect, the invention relates to a food product comprising the composition of the invention, and wherein the food product is a condiment, seasoning, sauce, soup or gravy.

As used in this specification, the words "comprises", "comprising", and similar words, are not to be interpreted in an exclusive or exhaustive sense. In other words, they are intended to mean "including, but not limited to".

Those skilled in the art will understand that they can freely combine all features of the present invention disclosed herein. In particular, features described for the composition of the present invention may be combined with the process for the preparation of the composition, and vice versa. Further, features described for different embodiments of the present invention may be combined. Further advantages and features of the present invention are apparent from the examples.

### EXAMPLES

The invention is further described with reference to the following examples. It will be appreciated that the invention as claimed is not intended to be limited in any way by these examples.

### Example 1:

The general procedure for preparing gel compositions of the invention is as follows:
- prepare a pre-mix of the gelling agent(s) (e.g. legume starch with maltodextrin and/or glucose syrup powder);
- add the pre-mix to water with mixing at about 50°C;
- heat the mix to a temperature of at least 90°C for at least 2 minutes;
- add all other ingredients (including the salts and flavourings);
- heat the mix at a temperature of at least 72°C for at least 5 minutes in order to pasteurize the mix;
- cool the mix to between ca. 45-50°C;
- add un-gelatinised starch to the mixture, either in solid form or as a slurry in oil;
- fill the composition into containers and allow the gel to form and set at room-temperature.

### Example 2-7:

A composition according to the invention was prepared according to the general method as described in Example 1 using the amounts of ingredients in the following table:

| | **Example 2** | **Example 3** | **Example 4** |
|---|---|---|---|
| **Ingredient (%w/w)** | **Amount [%]** | **Amount [%]** | **Amount [%]** |
| Added Water | 33 | 51 | 51 |
| Salt | 9 | 15 | 15 |
| Pea starch | 3.0 | 2.3 | 3.6 |
| Oil/ fat | 6.8 | 5 | 5 |
| Un-gelatinized potato starch | 24.8 | 20 | 20 |
| Flavourings | up to 100 | up to 100 | up to 100 |
| **pH** | 5.14 | 4.24 | 5.36 |
| **Aw** | 0.790 | 0.784 | 0.789 |
| **Rupture Strength [g]** | 23.8 | 25 | 63.6 |
| **Total moisture (%)** | 37.69 | 54.23 | 54.36 |
| **Salt content** (on basis of total moisture content) | 19.3 | 21.7 | 21.6 |
| **Pea starch** (content on basis of total moisture content) | 7.4 | 4.1 | 6.2 |

| | **Example 5** | **Example 6** | **Example 7** |
|---|---|---|---|
| **Ingredient (%w/w)** | **Amount [%]** | **Amount [%]** | **Amount [%]** |
| Added Water | 51 | 51 | 33 |
| Salt | 15 | 15 | 9 |
| Pea starch | 5.1 | 6.6 | 4.1 |
| Oil/ fat | 5.78 | 5 | 6.8 |
| Un-gelatinized potato starch | 20 | 20 | 24.8 |
| Flavourings | up to 100 | up to 100 | up to 100 |
| **pH** | 0.797 | 6.14 | 5.13 |
| **Aw** | 150.9 | 0.807 | 0.786 |
| **Rupture Strength [g]** | 54.5 | 186.6 | 91.2 |
| **Total moisture (%)** | 21.6 | 54.7 | 37.8 |
| **Salt content** (on basis of total moisture content) | 8.6 | 21.5 | 19.2 |
| **Pea starch content** (on basis of total moisture content) | 19.1 | 10.8 | 9.8 |

### Example 8-11:

A composition according to the invention was prepared according to the general method of Example 1 using the amounts of ingredients in the following table:

| | **Example 8** | **Example 9** |
|---|---|---|
| **Ingredient (%w/w)** | **Amount [%]** | **Amount [%]** |
| Added Water | 51 | 47.5 |
| Salt | 15 | 15 |
| Chickpea flour (Naturawerk) | 5.3 | 10.7 |
| Un-gelatinized potato starch | 20 | 20 |
| Flavourings | up to 100 | up to 100 |
| **Aw** | 0.794 | 0.779 |
| **Rupture strength [g]** | 30.4 | 250.6 |
| **Total Moisture (%)** | 54.2 | 50.9 |
| **Salt content** (on basis of total moisture content) | 21.7 | 22.7 |
| **Flour content** (on basis of total moisture content) | 8.9 | 17.3 |

| | **Example 10** | **Example 11** |
|---|---|---|
| **Ingredient (%w/w)** | **Amount [%]** | **Amount [%]** |
| Added Water | 51 | 47.5 |
| Salt | 15 | 15 |
| Red lentil flour (Muller's Mühle) | 4.8 | 10.7 |
| Un-gelatinized potato starch | 20 | 20 |
| Flavourings | up to 100 | up to 100 |
| **Aw** | 0.790 | 0.779 |
| **Rupture strength [g]** | 27.4 | 250.6 |
| **Total Moisture (%)** | 54.2 | 51.0 |
| **Salt content** (on basis of total moisture content) | 21.7 | 22.7 |
| **Flour content** (on basis of total moisture content) | 8.1 | 17.34 |

### Example 12:

No syneresis under normal storage conditions after 3 months (20-30°C) has been observed for examples 2-7 with pea starch as gelling agent showing that also without xanthan no syneresis has been observed.

### Example 13:

Rupture strengths of the resulting gels from the Examples 2 to 11 were determined.

The term "rupture strength" is used in reference to gel strength and relates to the deformation force needed to break a gel. The rupture strength of a gel should be at least 20 g, but preferably greater than 23 g, as measured using a Texture Analyser.

Rupture strength was measured using a Texture Analyser TAXT2 (Microstable systems) according to the following conditions:
- load cell: 5 kg.
- Penetration test using a cylindrical probe of 1.27 cm diameter.
- The sample was loaded just after heating into a container of 50 mm diameter, until reaching a height of 55 mm. The sample was allowed to cool and gel at ambient temperature. Before measurement, the sample is placed in a water-bath at 20 °C for temperature equilibration.
- Test conditions: pre-test speed: 1 mm/s, test speed: 0.5 mm/s, post speed: 10 mm/s. Measurement was stopped at 25 mm penetration depth.
- The rupture strength is recorded at the peak of the curve force versus penetration depth.

### Example 14:

The resulting products from the Examples 2 to 11 when dissolved in water and heated for at least 1 min delivered the texture of a sauce. It is also to be mentioned that the prepared sauce maintained its thickened texture during cooling as well without re-jellifying.

As a comparison, comparable products available on the market place manufactured with making use of xanthan, locust bean gum as gelling agent and were tested in parallel to the Examples 2 to 11. It was observed that those comparative products which gave a texture during the cooking process showed already reformation of a gel only minutes after the cooking process. The test samples from the Examples 2 to 11 did not re-jellify during this same period after the cooking process. The re-forming of a gel of xanthan, locust bean gum as gelling agent can lead to an undesirable texture for consumption of the product when the dish is cooling.

## Claims

1. A composition for preparing a food product, the composition comprising:
i) water in an amount of 30 to 60% (by weight of the total composition),
ii) flavourings in an amount of 1 to 40% (by weight of the total composition),
iii)salt in an amount of 10 to 30% (by weight of the total moisture),
iv) legume starch as a gelling agent in an amount of 3 to 15% (by weight of the total moisture), and
v) un-gelatinised starch in an amount of 10 to 40% (by weight of the total composition);
wherein the composition is in the form of a gel and does not include polyol, guar gum, locust bean gum, tara gum, cassia gum, konjac mannan, carrageenan or any combination thereof.

2. The composition according to claim 1, wherein the legume starch is pea starch, chickpea starch, lentil starch, red lentil starch, bean starch, mung bean starch or a combination thereof.

3. The composition according to claim 1 or 2, wherein the gel has a rupture strength of at least 20g.

4. The composition according to one of the claims 1 to 3, wherein the amount of the un-gelatinised starch in the composition is in the range 20 to 35% (by weight of the total composition).

5. The composition according to one of the claims 1 to 4, wherein the un-gelatinised starch is corn starch, physically modified potato starch or a combination thereof.

6. The composition according to one of the claims 1 to 5, wherein the composition further comprises xanthan.

7. The composition according to claim 6, wherein the xanthan is present in the composition in an amount of 0.05 to 1.5% (by weight of the total composition).

8. The composition according to one of the claims 1 to 7, wherein the composition further comprises fat or/and oil.

9. The composition according to claim 8, wherein an amount of fat or/and oil is in the range 3 to 13% (by weight of the total composition).

10. The composition according to one of the claims 1 to 9, wherein the amount of flavourings is in the range of 15 to 30%.

11. A process for preparing a composition in the form of a gel for preparing a food product according to one of the claims 1 to 10 comprising the steps:
a) mixing legume starch as a gelling agent in water at a temperature below 60°C;
b) heating the mixture to a temperature of at least 80°C, preferably to at least 90°C, and maintain the temperature for at least 2 min at that temperature;
c) adding salt and flavourings and mixing further;
d) pasteurize the mixture of step c) at a temperature of at least 70°C, preferably of at least 80°C;
e) cooling the mixture after pasteurization to a temperature within the range 20°C to 60°C, preferably 25°C to 50°C, more preferably 30°C to 45°C; and
f) adding un-gelatinised starch to the mixture of step e) after the cooling, mixing further to form the composition, filling the composition into packaging containers and letting the composition sit and form a gel.

12. The process according to claim 11, wherein the un-gelatinised starch is added in the form of a solid powder or as a slurry of starch in oil.

13. A use of the composition according to one of the claims 1 to 10 for the preparation of a food product.

14. A food product prepared with using the composition according to one of the claims 1 to 10.

15. The food product according to claim 14, wherein the food product is a condiment, seasoning, sauce, soup or gravy.

## Patentansprüche

1. Zusammensetzung zum Herstellen eines Lebensmittelprodukts, wobei die Zusammensetzung Folgendes umfasst:
i) Wasser in einer Menge von 30 bis 60 % (bezogen auf das Gewicht der Gesamtzusammensetzung),
ii) Geschmacksstoffe in einer Menge von 1 bis 40 % (bezogen auf das Gewicht der Gesamtzusammensetzung),
iii) Salz in einer Menge von 10 bis 30 % (bezogen auf das Gewicht der Gesamtfeuchtigkeit),
iv) Hülsenfruchtstärke als Gelierungsmittel in einer Menge von 3 bis 15 % (bezogen auf das Gewicht der Gesamtfeuchtigkeit), und
v) ungelatinisierte Stärke in einer Menge von 10 bis 40 % (bezogen auf das Gewicht der Gesamtzusammensetzung);
wobei die Zusammensetzung in der Form eines Gels vorliegt und kein Polyol, Guarkernmehl, Johannisbrotkernmehl, Taragummi, Kassiagummi, Konjac Mannan, Carrageen oder eine Kombination davon beinhaltet.

2. Zusammensetzung nach Anspruch 1, wobei es sich bei der Hülsenfruchtstärke um Erbsenstärke, Kichererbsenstärke, Linsenstärke, Stärke roter Linsen, Bohnenstärke, Mungobohnenstärke oder eine Kombination davon handelt.

3. Zusammensetzung nach Anspruch 1 oder 2, wobei das Gel eine Reißfestigkeit von mindestens 20 g aufweist.

4. Zusammensetzung nach einem der Ansprüche 1 bis 3, wobei die Menge an ungelatinisierter Stärke in der Zusammensetzung im Bereich von 20 bis 35 % (bezogen auf das Gewicht der Gesamtzusammensetzung) liegt.

5. Zusammensetzung nach einem der Ansprüche 1 bis 4, wobei es sich bei der ungelatinisierten Stärke um Maisstärke, physikalisch modifizierte Kartoffelstärke oder eine Kombination davon handelt.

6. Zusammensetzung nach einem der Ansprüche 1 bis 5, wobei die Zusammensetzung ferner Xanthan umfasst.

7. Zusammensetzung nach Anspruch 6, wobei das Xanthan in der Zusammensetzung in einer Menge von 0,05 bis 1,5 % (bezogen auf das Gewicht der Gesamtzusammensetzung) vorliegt.

8. Zusammensetzung nach einem der Ansprüche 1 bis 7, wobei die Zusammensetzung ferner Fett oder/und Öl umfasst.

9. Zusammensetzung nach Anspruch 8, wobei eine Menge an Fett oder/und Öl im Bereich von 3 bis 13 % (bezogen auf das Gewicht der Gesamtzusammensetzung) liegt.

10. Zusammensetzung nach einem der Ansprüche 1 bis 9, wobei die Menge an Geschmacksstoffen im Bereich von 15 bis 30 % liegt.

11. Verfahren zum Herstellen einer Zusammensetzung in der Form eines Gels zum Herstellen eines Lebensmittelprodukts nach einem der Ansprüche 1 bis 10, das die folgenden Schritte umfasst:
a) Mischen von Hülsenfruchtstärke als Geliermittel in Wasser bei einer Temperatur unterhalb von 60 °C;
b) Erwärmen des Gemischs auf eine Temperatur von mindestens 80 °C, vorzugsweise auf mindestens 90 °C, und beibehalten der Temperatur auf dieser Temperatur für mindestens 2 min;
c) Zugeben von Salz und Geschmacksstoffen und weiteres Mischen;
d) Pasteurisieren des Gemischs aus Schritt c) bei einer Temperatur von mindestens 70 °C, vorzugsweise von mindestens 80 °C;
e) Abkühlen des Gemischs nach der Pasteurisierung auf eine Temperatur innerhalb des Bereichs von 20 °C bis 60 °C, vorzugsweise 25 °C bis 50 °C, mehr bevorzugt 30 °C bis 45 °C; und
f) Zugeben von ungelatinisierter Stärke zu dem Gemisch aus Schritt e) nach dem Abkühlen, weiteres Mischen zum Bilden der Zusammensetzung, Füllen der Zusammensetzung in Verpackungsbehälter und die Zusammensetzung ruhen und ein Gel bilden lassen.

12. Verfahren nach Anspruch 11, wobei die ungelatinisierte Stärke in der Form eines festen Pulvers oder einer Aufschlämmung von Stärke in Öl zugegeben wird.

13. Verwendung der Zusammensetzung nach einem der Ansprüche 1 bis 10 zur Herstellung eines Lebensmittelprodukts.

14. Lebensmittelprodukt, das unter Verwendung der Zusammensetzung nach einem der Ansprüche 1 bis 10 hergestellt wird.

15. Lebensmittelprodukt nach Anspruch 14, wobei es sich bei dem Lebensmittelprodukt um ein Würzmittel, Gewürze, eine Soße, Suppe oder Bratensoße handelt.

## Revendications

1. Composition pour la préparation d'un produit alimentaire, la composition comprenant :
i) de l'eau en une quantité de 30 à 60 % (en poids de la composition totale),
ii) des agents aromatisants en une quantité de 1 à 40 % (en poids de la composition totale),
iii) du sel en une quantité de 10 à 30 % (en poids de l'humidité totale),
iv) de l'amidon de légumineuse comme agent gélifiant en une quantité de 3 à 15 % (en poids de l'humidité totale), et
v) de l'amidon non gélatinisé en une quantité de 10 à 40 % (en poids de la composition totale) ;
la composition étant sous la forme d'un gel et n'incluant pas de polyol, de gomme guar, de gomme de caroube, de gomme tara, de gomme cassia, de konjac mannane, de carraghénine ou toute combinaison de ceux-ci.

2. Composition selon la revendication 1, dans laquelle l'amidon de légumineuse est de l'amidon de pois, de l'amidon de pois-chiche, de l'amidon de lentille, de l'amidon de lentille rouge, de l'amidon de haricot, de l'amidon de haricot mungo ou une combinaison de ceux-ci.

3. Composition selon la revendication 1 ou 2, dans laquelle le gel a une résistance à la rupture d'au moins 20 g.

4. Composition selon l'une des revendications 1 à 3, dans laquelle la quantité d'amidon non gélatinisé dans la composition est dans la plage de 20 à 35 % (en poids de la composition totale).

5. Composition selon l'une des revendications 1 à 4, dans laquelle l'amidon non gélatinisé est de l'amidon de maïs ou de l'amidon de pomme de terre physiquement modifié, ou une combinaison de ceux-ci

6. Composition selon l'une des revendications 1 à 5, la composition comprenant en outre du xanthane.

7. Composition selon la revendication 6, dans laquelle le xanthane est présent dans la composition en une quantité de 0,05 à 1,5 % (en poids de la composition totale).

8. Composition selon l'une des revendications 1 à 7, la composition comprenant en outre de la matière grasse et/ou de l'huile.

9. Composition selon la revendication 8, dans laquelle une quantité de matière grasse et/ou d'huile est dans la plage de 3 à 13 % (en poids de la composition totale).

10. Composition selon l'une des revendications 1 à 9, dans laquelle la quantité d'agents aromatisants est dans la plage de 15 à 30 %.

11. Procédé de préparation d'une composition sous la forme d'un gel pour la préparation d'un produit alimentaire selon l'une des revendications 1 à 10 comprenant les étapes de :
a) mélange de l'amidon de légumineuse comme agent gélifiant dans de l'eau à une température inférieure à 60 °C ;
b) chauffage du mélange à une température d'au moins 80 °C, de préférence jusqu'à au moins 90 °C et maintien de la température pendant au moins 2 min à cette température ;
c) ajout de sel et d'agents aromatisants et mélange supplémentaire ;
d) pasteurisation du mélange de l'étape c) à une température d'au moins 70 °C, de préférence d'au moins 80 °C ;
e) refroidissement du mélange après pasteurisation à une température dans la plage de 20 °C à 60 °C, de préférence 25 °C à 50 °C, plus préférablement 30 °C à 45 °C ; et
f) ajout d'amidon non gélatinisé au mélange de l'étape e) après le refroidissement, mélange supplémentaire pour former la composition, remplissage de la composition dans des récipients de conditionnement et la composition est laissée reposer et former un gel.

12. Procédé selon la revendication 11, dans lequel l'amidon non gélatinisé est ajouté sous la forme d'une poudre solide ou en tant que bouillie d'amidon dans de l'huile.

13. Utilisation de la composition selon l'une des revendications 1 à 10 pour la préparation d'un produit alimentaire.

14. Produit alimentaire préparé en utilisant la composition selon l'une des revendications 1 à 10.

15. Produit alimentaire selon la revendication 14, le produit alimentaire étant un condiment, un assaisonnement, une sauce, une soupe ou un jus de viande.
